# EUROPEAN PATENT APPLICATION

(11) **EP 3 248 676 A1**
(43) Date of publication of application: **29.11.2017**
(21) Application number: 16191346.2
(22) Date of filing: 29.09.2016
(51) Int. Cl.: B01J 19/18

(54) **SURFACE TREATING METHOD USING A COUETTE-TAYLOR REACTOR**

(30) Priority: 23.05.2016 KR 20160062892
(71) Applicant: Laminar Co., Ltd., Seongnam-si, Gyeonggi-do 13219 (KR)
(72) Inventor: HONG, Jong Pal, 13219 SEONGNAM-SI, Gyeonggi-do (KR); CHOI, Gyeong Rye, 13219 SEONGNAM-SI, Gyeonggi-do (KR); JO, Eun Ji, 13219 SEONGNAM-SI, Gyeonggi-do (KR)
(74) Representative: Melchior, Robin

(57) **Abstract**

Disclosed herein is a surface treating method using a Couette-Taylor reactor wherein a washing, neutralization, heavy metal removal, etc. can be efficiently carried out, while saving a surface treating time and a treatment liquid and enhancing a treatment efficiency by using a Taylor eddy current which in general is formed at a Couette-Taylor reactor. The surface treatment method using a Couette-Taylor reactor formed of a cylindrical reaction chamber and a cylindrical rotation body which is configured to rotate in the reaction chamber may include (1) a supply step wherein a surface treatment thing and a surface treatment liquid are supplied into the reaction chamber; and (2) a treatment step wherein the surface treatment thing is stayed in the reaction chamber while rotating the cylindrical rotation body, and the stay time of the surface treatment thing is in a range of 1 minute to 6 hours.

## Description

### BACKGROUND

### Technical Field

The present invention relates to a surface treating method using a Tayler reactor, and in particular to a surface treating method using a Tayler reactor wherein a washing, neutralization, heavy metal removal, etc. can be efficiently carried out, while saving a surface treating time and a treatment liquid and enhancing a treatment efficiency by using a Tayler eddy current which in general is formed at a Tayler reactor.

### Background Art

The physical properties of a predetermined material are considered an important matter to provide to the upmost the natural physical property thereof in the art of a materials science, namely, a materials art, but a surface treatment including a washing treatment related with the removal of any impurities from a material, for example, any contaminant in the material is also considered an important matter. Carbon may exist in various forms, namely, in the forms of allotropes or it may exist in the form of a compound like a carbide bonded with elements which are more positive than the carbon. Many scientists and engineers are doing researches using various forms of carbon allotropes to develop a new advanced technology, and the potentials of such materials are high. Fullerene, nano-tubes, graphene, etc. are regarded as a "dream material" and may substitute silicon in the 21^{st} century. They are known as having high applicability. For example, since a fullerene (Buckyball) shaped like a soccer ball has a stable structure, it is able to endure a relatively high temperature and pressure and is able to lock up very small substances like a cage. Since the aforementioned fullerene has a strong and slippery property, it can be likely to be used in an organic photoelectric cell, a polymer electronics, an antioxidant, a lubricant, an industrial catalyst, a superconductor, an optical device, an antimicrobial agent, a medicine carrier, a HIV inhibitor, etc. A lot of studies are being conducted to use a cylinder-shaped carbon nanotube in the art of a semiconductor, a flat display, a battery, a super-strong fiber, a biological sensor high purity purification filter, etc. through intensive researches and developments. Since these carbon allotropes may have structures containing or including different substances due to their structures, a surface treatment, for example, a washing, etc. may be very important.

In recent years, a Couette-Tayler reactor and its industrial application are receiving big attentions.

The Korean patent laid-open No. 10-2015-0096899 (Title of the invention: a system for manufacturing a graphene oxide using a Couette-Tayler reactor) provides a method for producing an oxidized graphene which includes a first step wherein a graphite, an oxidizing agent and an acidic solution are inputted in a Couette-Tayler reactor and are reacted, thus producing a product containing an oxidized graphite; and a second step wherein the oxidized graphite is separated and peeled off from the product, thus producing an oxidized graphene.

The Korean patent laid-open number 10-2011-0036721 (Title of the invention: a method and apparatus for producing a graphene structure substance of nanoscales) provides a producing method and apparatus wherein a graphite sulfuric acid slurry and a permanganate sulfuric acid solution are forcibly inputted into a microchannel, and an oxidation reaction is caused between the layers of graphite, and ultrasonic waves are treated in the microchannel during the reaction so as to enhance the expansion and peeling-off efficiency between the layers of the graphite, and a hydrogen peroxide aqueous solution is injected at the end of the reaction, thus finishing the oxidation reaction, and the reaction mixture is washed and dried, thus producing an oxidized graphite, and provides a method and apparatus for producing a graphene structure substance of a nanoscale wherein the produced oxidized graphite is supplied into a fluidized bed furnace, and then a graphene structure substance of a nanoscale can be produced based on an interlayer separation due to a thermal impact. The aforementioned method and apparatus, however, require a washer which is employed to wash an oxidized graphite reaction mixture which is discharged after the oxidation reaction has been finished in the microchannel unit, and a drier which is connected to the washer and is employed to dry under a pressure-reduced environment the oxidized graphite which has been washed by the washer.

### SUMMARY OF THE DISCLOSURE

Accordingly, it is an object of the present invention to provide a surface treatment method using a Tayler reactor which is able to provide a good surface treatment using a Tayler reactor and is able to achieve a washing effect, for example, a pH neutralization, a metal ion removal and an inorganic substance removal in efficient, costeffective economic and environment friendly ways.

To achieve the above object, there is provided a surface treatment method using a Tayler reactor formed of a cylindrical reaction chamber and a cylindrical rotation body which is configured to rotate in the reaction chamber, which may include, but is not limited to, (1) a supply step wherein a surface treatment thing and a surface treatment liquid are supplied into the reaction chamber; and (2) a treatment step wherein the surface treatment thing is stayed in the reaction chamber while rotating the cylindrical rotation body, and the stay time of the surface treatment thing is in a range of 1 minute to 6 hours.

The temperature of the reaction chamber during the treatment step is in a range of 0 to 300°C.

The surface treatment thing is any one selected from the group consisting of carbons, carbon allotropes except for carbons, carbides and a combination of two or more of them.

During the treatment step, the cylindrical rotation body rotates at a predetermined rotation speed fast enough to generate a Tayler eddy current.

The Tayler reactor is a horizontal type Tayler reactor wherein the reaction chamber and the cylindrical rotation body are disposed vertical with respect to the direction of gravity.

### ADVANTAGEOUS EFFECTS

According to the present invention, the productivity can be enhanced while saving the cost by reducing the surface treatment time in such a way to put a surface treatment thing the surface of which will be treated, into a Tayler eddy current in a Tayler reactor.

According to the present invention, it is possible to prevent any environment-related problems in such a way to reduce the amount of generated waste water by saving the materials used for a surface treatment, namely, a washing liquid.

According to the present invention, a washing efficiency, a neutralization efficiency and a metal ion-included inorganic substance removal efficiency can be enhanced through the surface treatment, and the amount of energy used to heat during the surface treatment can be saved.

### BRIEF DESCRIPTION OF THE DRAWINGS

Figure 1 is a side cross sectional view illustrating an example of a Tayler reactor which can be employed in the present invention;
Figure 2 is a graph showing a result of the pH measurements after a surface treatment (an embodiment 1) according to the present invention and a conventional batch type washing (a comparison example 1) have been carried out; and
Figure 3 is a graph showing a concentration change after a metal ion removal has been carried out in a surface treatment according to another embodiment of the present invention.

### DETAILED DESCRIPTION

The detailed embodiments of the present invention will be described with reference to the accompanying drawings.

In the disclosed embodiments, the same reference numbers mean the same components, and any surplus descriptions which might be interpreted as being duplicative or limiting the meaning of the present invention will be omitted during the descriptions on the embodiments of the present invention.

Before the present invention is described in detail, even though a predetermined noun is described in a singular form, it should be interpreted as including multiple meanings unless it is absolutely contradicted or different in terms of its interpretation while not being beyond the concept of the present invention, given an environment wherein the nouns are being used without clarifying the singular and multiple nouns specifically and an environment wherein such terms are typically being used in the corresponding fields. Moreover, the terms "comprise", "have", "is equipped with", "formed by including", etc. used throughout the specification should be interpreted as not excluding any possibility that there may be one or more different features or components or a combination thereof or any other additions.

Unless otherwise stated herein this specification, the term "a surface treatment thing" should be interpreted as a processing target, namely, a target material which is intended to be surface-treated, and unless otherwise stated, the term "a surface treatment liquid" should be interpreted as a liquid which will be used to surface-treat a surface treatment thing and as a liquid which may cause a Tayler eddy current in a Tayler reactor.

Furthermore, the term "a Tayler reactor" used throughout the specification should be interpreted as having the same meaning as a "Couette-Tayler reactor", and they may be used alternatively.

In the surface treatment method using a Tayler reactor according to the present invention, the surface treatment method using a Tayler reactor formed of a cylindrical reaction chamber and a cylindrical rotation body which is configured to rotate in the reaction chamber may include, but is not limited to, (1) a supply step wherein a surface treatment thing and a surface treatment liquid are supplied into the reaction chamber; and (2) a treatment step wherein the surface treatment thing is stayed in the reaction chamber while rotating the cylindrical rotation body, and the stay time of the surface treatment thing is in a range of 1 minute to 6 hours.

In the present invention, a new process has been developed and lead to an invention, wherein a surface treatment, in particular, the washings and neutralizations of various carbon substances (carbons, carbon allotropes except for carbons, carbides, etc.) and heavy metal removals are carried using a Tayler reactor which is able to generate a predetermined fluid flow called a "Tayler eddy current".

The flow in the Tayler reactor may be specified as a "Tayler eddy current" which may be formed of eddy current cells periodically arranged along a cylindrical rotation body. In the aforementioned Tayler eddy current, the fluid near the inner cylinder tends to move toward the fixed outer cylinder due to the centrifugal force which occurs as the inner cylinder rotates when the fluid flows between the two concentric cylinders, by which the fluid layers become unstable, thus causing an eddy current. Such an eddy current generally occurs if the rotation speed of the inner cylinder goes over a predetermined threshold under a constant condition, and each flow component may be formed of a pair of ring-shaped eddy currents which rotate in opposite directions, and the axial direction length of each cell is same as the distance between the inner and outer cylinders. The Tayler reactor may be simplified into a continuous tank reactor having the same volume and detention time, and the ring-shaped eddy currents may be defined as a continuous batch type reactor. By using the aforementioned Tayler eddy current, it is possible to obtain a very regular and even combined liquidity, and it is advantageous that any influences from an agitator of a typical reactor can be eliminated and a shearing stress can be easily adjusted. By using the Tayler eddy current during the surface treatment, the present invention makes it possible to continuously use a condition wherein an even contact can be made between the surface treatment thing and the surface treatment liquid, whereupon the surface treatment effects, in particular, the washings and neutralizations of various carbon substances (namely, carbons, carbon allotropes except for carbons and carbides, etc.) and heavy metal removals can be carried out.

The term "a surface treatment" used throughout the specification means a surface treatment of a treated thing and a process which makes easier the following process, work, etc. According to an architecture dictionary, it is defined as "a physical or chemical method for treating the surface of a predetermined material for the sake of adhering, decoration, etc. It may be any of a polishing, a solvent washing, an electrolysis, a corrosion, etc.", and according to a mechanical engineering dictionary, it is defined as "a meaning to collectively call a hardening treatment, an anticorrosion, a plating, a clarification treatment, etc." Unless otherwise stated, the surface treatment means including a washing, a neutralization, an ion removal, etc.

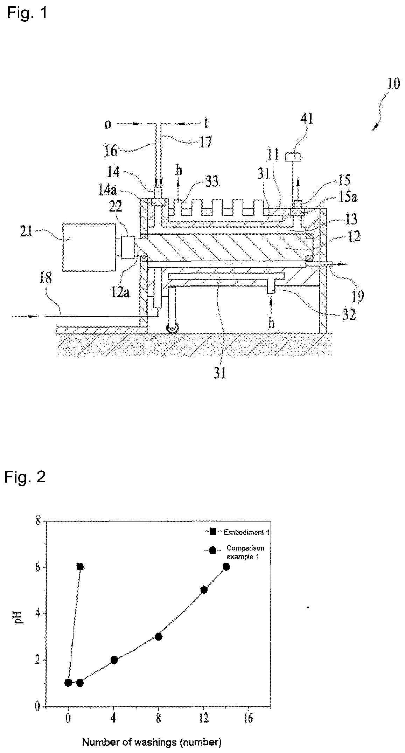

As illustrated in Figure 1, the Tayler reactor 10 may include, but is not limited to, a main body 11 having a cylindrical reaction chamber 13, a cylindrical rotation body 12 which is fixed rotatable in the reaction chamber 13, a first inlet port 14 for receiving a reactant, for example, a surface treatment thing (o) and a surface treatment liquid (t), into the reaction chamber 13, and a first discharge port 15 for discharging the reactant from the reaction chamber 13 via the first inlet port 14.

At least one or more supply line, for example, a first supply line 16 for supplying the surface treatment thing (o) and a second supply line 17 for supplying the surface treatment liquid (t), may be connected to the first inlet port 14. Moreover, the first inlet port 14 may preferably include a reception control valve 14a for controlling the flow of fluid which passes through the reception control valve 14a. In the same way, the first discharge port 15 may include a discharge control valve 15a for controlling the flow of fluid which passes through the discharge control valve 15a. There may be further provided a flow rate control unit 41 for controlling the discharging amount of the fluid which passes through the flow rate control unit 41. In addition to the first supply line 16 and the second supply line 17, a third supply line 18 or more can be further provided. The cylindrical rotation body 12 can be fixed rotatable in the reaction chamber 13 and about a rotary shaft 12a. The rotary shaft 12a may be connected with an electric power supply source, for example, a motor 21 like an electric motor, which is able to supply electric power to rotate the cylindrical rotation body 12. Preferably, a transmission gear unit 22 may be interposed between the motor 21 and the rotary shaft 12a so as to accelerate or decelerate the rotation speed of the motor 21, but it is not limited thereto. For example, it may be a geared motor wherein the motor 21 is equipped with a decelerator. An inverter may be connected thereto so as to adjust the rotation speed. The main body 11 may further include a heat jacket 31 disposed near the reaction chamber 13. There may be further provided a second inlet port 32 for receiving a thermal medium (h) into the heat jacket 31, and a second discharge port 33 for discharging the heat medium (h) from the heat jacket 31. The temperature of the reaction chamber 13 or the reactant inside the reaction chamber 13 can be controlled through the coming in and going out of the heat medium (h) through the heat jacket 31. The reaction chamber 13 may further include a third discharge port 19 for discharging the reactant.

The aforementioned supply step may be implemented by supplying a surface treatment thing and a surface treatment liquid into the reaction chamber. For example, in case of the washing, the surface treatment thing (o) may be a washing target thing, more preferably, a carbonaceous substance selected from the group consisting of carbons, carbon allotropes except for carbons, carbides and a combination of two or more of the aforementioned substances. The surface treatment liquid (t) is provided for washing and may be water, more preferably, distilled water. The surface treatment liquid may change based on required surface treatments. For example, when it needs to eliminate metal ions from the carbonaceous substance, it may be an acidic aqueous solution, preferably, a mixed acid aqueous solution. For the sake of inorganic substance removals, it may be an acidic aqueous solution or a base aqueous solution. It is obvious that the present invention does not limit the kinds of acids in the acidic aqueous solution and/or the kinds and concentration of the base in the base aqueous solution.

The aforementioned treatment step may be carried out in such a way that the surface treatment thing is stayed in the reaction chamber while the cylindrical rotation body of the Tayler reactor is rotated, and the stay time thereof is 1minute to 6 hours. In thus treatment step, the surface treatment thing is stayed in the reaction chamber, and the surface treatment thing is evenly mixed with the surface treatment liquid in the so-called continuous Tayler eddy current formed in the Tayler reactor, whereby the treatment can be carried out as if the washing procedure is carried multiple times. More specifically, it is possible to obtain the effects same as or similar to the treatment which is carried out multiple times of the flow components in a pair of ring-shaped eddy currents which rotate in the opposite direction formed in the Tayler reactor, thus maximizing the surface treatment effects.

During the aforementioned treatment step, the temperature of the reaction chamber is in a range of 0 to 300°C. Preferably, in case of the washing, the treatment step can be carried out at a room temperature, and the heating and/or cooling may be carried out in a range of different temperatures based on the kinds of the surface treatments. It is obvious to a person having ordinary skill in the art that the temperature of the reaction chamber can be easily carried out by controlling the temperature of the heat medium (h) via the heat jacket and the flow rate of the heat medium.

During the treatment step, the cylindrical rotation body 12 may be rotated at a rotation speed fast enough to form a Tayler eddy current, and the rotation speed may be adjusted different based on the kinds and aspects of the targeted surface treatment.

It is preferred that the Tayler reactor is a horizontal type Tayler reactor wherein the reaction chamber and the cylindrical rotation body are disposed vertical with respect to the direction of gravity, which allows to prevent any sedimentation during the treatment step of the carbonaceous substance selected from the group consisting of a surface treatment thing (o) which is a target of the surface treatment, in particular, carbons, carbon allotropes except for carbons, carbides and a combination of two or more of the aforementioned components, thus carrying out a constant surface treatment based on an even mixing with the surface treatment liquid.

The preferred embodiments and comparative examples of the present invention will be described.

The embodiments below are provided for illustrative purposes and should not be understood as limiting the scope of the present invention.

### Embodiment 1: pH neutralization

The experiments were carried out so as to prove the pH neutralization effects after the surface treatment.

In order to test the pH neutralization effects in case of washing in such a way to use a graphene as a surface treatment thing, 10g of a graphene was dipped in 600mℓ of a mixed acid liquid wherein a nitric acid and a sulfuric acid were mixed at a ratio of 1:1, and ultrasonic waves were supplied thereto for 30 minutes while maintaining a temperature of 80°C and an agitated state (an agitation was carried out for them to be blended well), and a filtration was carried out, and the filtered solid content was used in a washing test.

In case of the comparison example 1 (a conventional batch type washing), 1g of the filtered solid content was inputted in an osmosis membrane, and thus osmosis membrane was inputted into a container where 5ℓ of the distilled water was filled as a washing liquid, and the washing liquid was exchanged 2 times per day, and the time that pH of the washing liquid became 6, was measured. The pH measurement was carried out using a pH test paper which was commercially available in local or foreign countries.

In case of the embodiment 1 of the present invention, at a room temperature, 1g of the filtered solid content was inputted into a horizontal type Tayler reactor together with 1ℓ of the distilled water which was used as a washing liquid, and the Tayler reactor was continuously operated (more specifically, the cylindrical rotation body was rotated at 600rpm) (the total operation time of the Tayler reactor was 1.66 hours) for the Tayler eddy current to be maintained for 10 minutes, and subsequently, pH of the solid content was measured after it has been washed. The measurement of pH was carried out in such a way that 1g of the washed solid content was inputted in 500mℓ of the distilled water and was left alone for 1 hour, and it was measured using a pH test paper which was commercially available in local or foreign countries.

In case of the comparison example 1, the washing was carried in such a way to exchange the washing liquid 2 times per day (at every 12 hours) for 7 days until pH of the washing liquid became 6. Consequently, 70ℓ of the distilled water was used as the washing liquid for 168 hours, but in case of the embodiment 1 of the present invention, only 1ℓ of the distilled water was used for the total lead time of 1.66 hours until the neutralization of up to pH 6 was obtained. The present invention has effect on a process time (a washing time) 98% reduction and a washing liquid 98.6% reduction, while obtaining the same pH neutralization effects. These effects are expressed in the form of a graph as in Figure 2.

### Embodiment 2: Removal of metal ions

The test was carried so as to prove the metal ion removing effects thanks to the surface treatment.

A graphite was directly produced to test a metal ion removing effect thanks to the washing by using a graphite as a surface treatment thing.

As a control group, the content of the metal ions of the graphite used as a source material before the washing had been carried out, was measured.

In a comparison example 2, 10g of a graphite was loaded using a washing liquid wherein 50mℓ of a mixed acid mixed at a ratio of "sulfuric acid: nitric acid: hydrochloric acid = 1: 1: 1" based on weight as a washing liquid was mixed with 50mℓ of a distilled water, and the mixture was agitated and subsequently left still, and the graphite was sunk, and a supernatant was removed. Thereafter, a batch washing method was carried out in such a way to repeatedly pour in a newly produced washing liquid. Subsequently, the content of the metal ions of the graphite which had been washed, was measured.

According to the embodiment 2 of the present invention, 50mℓ of a mixed acid aqueous solution mixed at a ratio of "sulfuric acid: nitric acid: hydrochloric acid = 1: 1: 1" based on weight as a washing liquid was inputted into a horizontal type Tayler reactor together with 10g of a graphite, and the Tayler reactor was continuously operated for 3 hours (namely, the cylindrical rotation body was rotated at 600rpm), and subsequently, the content of metal ions of the graphene which had been washed, was measured.

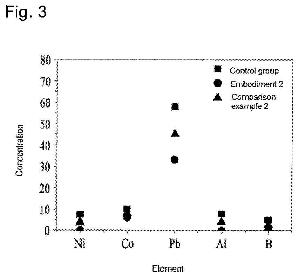

As a result of the measurement is shown in Table 1 and Figure 3. As seen therein, it is possible to confirm that the metal ions can be efficiently eliminated through the washing which is carried out using the Tayler reactor according to the present invention. After the washing according to the embodiment 2 of the present invention had been carried out, in case of the metal ion condensation, the condensations of all the metal ions were meaningfully decreased, and in particular, when the content of the metal ions included in the source material before the washing was higher, a better metal ion removing effect was obtained in proportion thereto, which meant that the present invention had effect on a good metal ion removing effect.

**[Table 1]**

| Classification | Control group | Embodiment 2 | Comparison example 2 |
|---|---|---|---|
| Ni | 7.5 | 0 | 3.7 |
| Co | 10 | 6 | 8 |
| Pb | 58 | 33 | 45 |
| Al | 8 | 0 | 4 |
| B | 5 | 0 | 2.5 |

Moreover, the embodiment 3 of the present invention was carried out in the same method as the embodiment 2 except that the Tayler reactor was carried out by the batch method, instead of a continuous operation method. A result thereof is shown in Table 2. As seen therein, it was possible to confirm that the same washing effects as in the embodiment 2 was obtained, namely, a metal ion removing effect was obtained, whereas productivity was decreased a little. More specifically, since the batch method requires a procedure of "a preparation time + a temperature raising time + a temperature lowering time" which is repeatedly carried out, the whole process time inevitably increases. As compared to this, the present invention requires a procedure of "a preparation time + a temperature raising time" which is carried out only once in case of a continuous process, by which it can be advantageously possible to continuously treat the desired amounts.

**[Table 2]**

| | Embodiment 3 | Embodiment 2 |
|---|---|---|
| Targeted production amount(ℓ) | 10 | |
| Capacity of reactor (ℓ) | 1 | |
| Preparation + temperature raising (time) | 0.5+1 | 0.5+1 |
| Reaction time (time) | 3 | 3 |
| Temperature lowering + draining (time) | 1+0.5 | Not necessary |
| Process time (time) | 30 | 30 |
| Number of processes (turn) | 10 | 1 |
| Total required time (time) | 60 | 31.5 |

### Embodiment 3: Removal of inorganic substance

The test for proving the inorganic substance removing effects thanks to the surface treatment was carried out.

A titanium carbide was directly produced so as to test the inorganic substance removing effects thanks to the washing in such a way to use the thusly produced titanium carbide as a surface treatment thing.

As a control group, the content of the inorganic substance of the titanium carbide as a source material before the washing was measured.

In the embodiments 4 and 5 of the present invention, 100g of distilled water used as a washing liquid and 10g of 95% sulfuric acid were inputted into a horizontal type Tayler reactor together with 10g of titanium carbide, and the Tayler reactor was operated continuously for 1 hour (namely, a cylindrical rotation body was rotated at 600rpm), and the titanium carbide after the washing was dried, and the washing was carried out once more in the same way except that 10g of 50% sodium hydroxide was used, instead of 10g of 95% sulfuric acid. The content of the inorganic substance of the titanium carbide after the washing was measured.

As a result of the measurement, as seen in Table 3, it was confirmed that the inorganic substance was efficiently removed through the washing which was carried out using the Tayler reactor according to the present invention. More specifically, the inorganic substance was meaningfully decreased after the washing according to the embodiments 4 and 5 of the present invention, and the inorganic substance removal ratio was increased in proportion to the increase of the washing time, by which it could be confirmed that the removing effects of the inorganic substance were good thanks to the washing.

**[Table 3]**

| Classification | Control group | Embodiment 4 | Embodiment 5 |
|---|---|---|---|
| SiO₂ | 0.4 | 0.24 | 0.08 |
| CaO | 0.03 | 0.009 | 0.005 |
| Fe₂O₃ | 0.065 | 0.018 | 0.013 |
| MgO | 0.029 | 0.009 | 0.007 |

### Test example 1: Surface treatment performance ability evaluation of Tayler reactor based on particle size of surface treatment thing

As a Tayler reactor, there are prepared both a horizontal type Tayler reactor wherein a reaction chamber and a cylindrical rotation body are disposed vertical with respect to the direction of gravity and a vertical type Tayler reactor wherein a reaction chamber and a cylindrical rotation body are disposed parallel with respect to the direction of gravity. The surface treatments with the titanium carbides (0.3g/cm³) of different particle sizes were tested for comparisons. A result of the tests is shown in Table 4.

**Table 4**

| Average particle sizes | Vertical type | Horizontal type |
|---|---|---|
| 100µm | Unavailable | Available |
| 0.7µm | Available | Available |
| 0.2µm | Available | Available |

As seen in the table 4, the surface treatment things having relatively smaller particle sizes were less influenced by gravity, so the surface treatment work could be carried out irrespective of the vertical type Tayler reactor or the horizontal type Tayler reactor. In case of the surface treatment things having relatively larger particle sizes, the work was limited in the vertical type Tayler reactor due to the influence by the gravity, but the surface treatment was available in the horizontal Tayler reactor. As for a result of the washing, in case of the relatively smaller particle sizes (namely, 0.2µm and 0.7µm), it was confirmed that the output from the horizontal Tayler reactor and the output from the vertical Tayler reactor had almost same washing effects.

As the present invention may be embodied in several forms without departing from the spirit or essential characteristics thereof, it should also be understood that the above-described examples are not limited by any of the details of the foregoing description, unless otherwise specified, but rather should be construed broadly within its spirit and scope as defined in the appended claims, and therefore all changes and modifications that fall within the meets and bounds of the claims, or equivalences of such meets and bounds are therefore intended to be embraced by the appended claims.

### Legend of reference numbers

- 10:: Tayler reactor
- 11:: Main body
- 12:: Cylindrical rotation body
- 13:: Reaction chamber
- 14:: First inlet port
- 15:: First discharge port
- 16:: First supply line
- 17:: Second supply line
- 18:: Third supply line
- 19:: Third inlet port
- 21:: Motor
- 22:: Transmission gear unit
- 31:: Heat jacket
- 32;: Second inlet port
- 33:: Second discharge port
- 41:: Flow rate control unit
- o:: Surface treatment thing
- T:: Surface treatment liquid
- h:: Heat medium

## Claims

1. A surface treatment method using a Tayler reactor formed of a cylindrical reaction chamber and a cylindrical rotation body which is configured to rotate in the reaction chamber, comprising:
(1) a supply step wherein a surface treatment thing and a surface treatment liquid are supplied into the reaction chamber; and
(2) a treatment step wherein the surface treatment thing is stayed in the reaction chamber while rotating the cylindrical rotation body, and the stay time of the surface treatment thing is in a range of 1 minute to 6 hours.

2. The method of claim 1, wherein the temperature of the reaction chamber during the treatment step is in a range of 0 to 300°C.

3. The method of claim 1, wherein the surface treatment thing is any one selected from the group consisting of carbons, carbon allotropes except for carbons, carbides and a combination of two or more of them.

4. The method of claim 1, wherein during the treatment step, the cylindrical rotation body rotates at a predetermined rotation speed fast enough to generate a Tayler eddy current.

5. The method of claim 1, wherein the Tayler reactor is a horizontal type Tayler reactor wherein the reaction chamber and the cylindrical rotation body are disposed vertical with respect to the direction of gravity.

6. The method of claim 1, wherein the surface treatment liquid is a washing liquid selected from the group consisting of a distilled water (H₂O), a base solution, an acidic solution and an organic solvent.
